# EUROPEAN PATENT SPECIFICATION

(11) **EP 2 933 669 B1**
(45) Date of publication and mention of the grant of the patent: **17.06.2020**
(21) Application number: 15163547.1
(22) Date of filing: 14.04.2015
(51) Int. Cl.: G02B 6/44

(54) **PROTECTION ELEMENT FOR PROTECTING A FIBER NETWORK COMPONENT AGAINST DAMAGE THEREOF, TAPPING BOX, METHOD OF INSTALLING A NETWORK, AND COMMUNICATIONS NETWORK**
SCHUTZELEMENT ZUM SCHUTZ EINES FASERNETZWERKBAUTEILS GEGEN BESCHÄDIGUNG DAVON, ABZWEIGDOSE, VERFAHREN ZUR INSTALLATION EINES NETZWERKS UND KOMMUNIKATIONSNETZWERK
ÉLÉMENT DE PROTECTION DESTINÉ À PROTÉGER UN COMPOSANT DE RÉSEAU DE FIBRES CONTRE LA DÉTÉRIORATION DE CELUI-CI, BOÎTE DE SOUTIRAGE, PROCÉDÉ D'INSTALLATION D'UN RÉSEAU ET RÉSEAU DE COMMUNICATION

(30) Priority: 15.04.2014 NL 2012627
(43) Date of publication of application: 21.10.2015
(73) Proprietor: Prysmian S.p.A., 20126 Milan (IT)
(72) Inventor: Doorn, Mijndert, 2627 AN Delft (NL); Zeng, Jianming, 2627 AN Delft (NL); van Trigt, Kees, 2627 AN Delft (NL)
(74) Representative: V.O.

(56) References cited:
- JP-A- 2001 174 644
- JP-A- 2010 032 579
- US-A1- 2008 232 757
- US-B1- 6 526 858

## Description

### Field of the invention

The present invention is directed at a protection element for protecting a fiber network component against damage thereof. The invention is further directed at a tapping box including such a protection element, a method of installing at least a part of an optical communications network, and a communications network including a protection element.

### Background

To reduce installation and labour costs involved with the implementation and roll-out of optical communications networks, a new deployment technology has been developed relatively recent. The technology makes use of so called retractable fiber modules. A retractable fiber module is a cable comprising a plurality of individual optical fiber modules, i.e. a 'cable within a cable' design. The internal friction within the retractable fiber module is low, such as to enable the fiber modules to be pulled out of the retractable fiber module through a cut-out, for further installation at a desired location. To connect a building to the network, the retracted fiber is terminated at a fiber termination unit.

Cables with retractable fibre modules are used both in underground and above ground optical cable installations. By means of a tapping box the retractable fibre module is branched to the customer's premises. In case of damage to the main cable, e.g. a strong pulling force caused by a trencher or dragline that accidentally hits the cable, excessively high forces will be applied to the fibre modules in that cable. This may cause the fibre module to be pulled out of the fibre termination unit in one or more customer's premises. To repair the fibre connection an appointment has to be made with each resident to be able to enter the customer's premises. This leads to high cost and long time to do the necessary repair. This problem is not limited to retractable fiber modules only, but may also occur with different types of optical cable.

Japanese patent application no. JP 2001-174644 discloses a fiber optic cable joint box for splicing terminal ends of optical cables. The joint box comprises a connecting part wherein the optical fibers are connected. The joint box is further equipped with a protection means for protecting the connecting part from damage when unexpected high loads are applied to the fibers. To this end, a construction is present inside the joint box comprising a fracture component interposed between the two optical cables in such a manner that the fracture component breaks when the tension between the both cables becomes too large. When this happens, this causes an interconnected cutting member to cut the fibers such as to protect the connecting part against damage.

The relatively complex arrangement of JP 2001-174644 protects the internal connecting part of the joint box. However, it cannot be applied to a fiber retracted from a retractable fiber module as described above, because it is designed for being implemented at the joint. It may be applied at the termination unit, however this does not resolve the problem. In case of a fiber cut as a result of a high force applied to the fiber, the cut would then still occur at the termination unit where the fiber is connected to the local area network at the premises. To repair, an engineer would still need to enter the building.

Moreover, the construction of JP 2001-174644 is a complex system of a fracture component connected with a cutting means. As a result, the arrangement as a whole is difficult to manufacture and can easily fail, e.g. when the fracture component would become stuck. It is also expensive to manufacture.

Furthermore, prior art document JP 2010-032579 discloses a cable pull-in method for retracting a communication cable such as an optical fiber cable or a signal transmission cable from an optical fiber trunk cable system constituting an optical wiring network into a building, and a member for protecting an indoor system during abnormal cable tension for use in these facilities.

### Summary of the invention

It is an object of the present invention to provide a solution to the abovementioned disadvantages of the prior art, and to provide a means of installing the fiber modules to buildings and other locations while keeping the installation method straightforward and in a manner wherein the fiber connections at the premises are protected.

To this end, there is provided herewith a protection element for protecting a fiber network component against damage thereof, the protection element comprising a guiding structure for receiving at least one fiber or fibre module, the guiding structure for guiding the fiber along a path between an entry location and an exit location of the fiber into and out of the protection element, wherein the guiding structure comprises: a fiber retaining element for retaining the fiber tightly to prevent sliding of the fiber in an axial direction thereof through the retaining element; and a cutting member; wherein the guiding structure is arranged for guiding the fiber along the path from the entry location, via and at least partly around the circumference of the cutting member, via the fiber retaining element to the exit location, such as to break the fiber upon a tightening of the fiber around the cutting member.

Throughout the present description, both the terms 'fibre' and 'fibre module' have been used. The protection element of the present invention can be used with a single fibre, as well as with a fibre module. Usually, the protection element will be used in combination with a fibre module, since any premises such as buildings will usually be connected to the communications network via a complete fibre module. This however should not be interpreted as being limiting on the invention, because it can be likewise applied for with only a single fibre if this is desired. The wording 'one or more fibres' or 'at least one fibre' herein must be interpreted as also including a fibre module. In accordance with embodiments of the invention, the at least one fiber is at least one of a group comprising: one or more individual fibers, a fiber module comprising one or more fibers, and a plurality of fiber modules.

The protection element in accordance with the present invention consists of a guiding structure which guides the fibre or fibre module through the element. A fibre retaining element firmly retains the fibre or fibre module and restricts its movement in sliding direction. By fixing the fibre module at the fibre retaining element, any force that is exerted on the fibre module before the entry location, will cause the fibre module to tighten within the guiding structure. It also prevents such force to be exerted on components that are behind the protection element after the exit location of the fibre module.

Because the guiding structure is arranged for guiding the fibre module at least party around the circumference of the cutting member, a tightening of the fibre module around the cutting member causes the cutting member to exert a force on the fibre module locally. Therefore, a tightening of the fibre module around the cutting member will cause the fibre module to break in the protection element. In summary, when a force is exerted on the fibre module before the entry location of the fibre module in the protection element, the fibre module tightens around the cutting member and breaks in the protection element.

As a result of the fibre module breaking within the protection element, any network components and elements installed behind the exit location of the protection element are protected from being damaged. Moreover, it is efficiently prevented that the fibre module breaks within the fibre termination unit or is pulled loose therefrom. As a result, repairing of the connection simply involves accessing the protection element, and perform the repairs there. This usually involves exposing the tapping box, accessible from the street.

In accordance with an embodiment of the invention, the guiding structure further comprises a first guiding column for guiding the at least one fiber at least partly around the circumference thereof, the first guiding column being located in the protection element along the path of the fiber between the cutting member and the retaining element. Although the embodiments may be designed without any further columns or structures in addition to the fibre retaining element and cutting member, an additional guiding column may advantageously guide the fibre module along a path such that it is suitably led past the cutting member and the retaining element and such that any forces exerted on the fibre module lead to the cutting thereof.

In accordance with a further embodiment, the guiding structure is arranged for guiding the at least one fiber along either one or both of a first path around a first side of the cutting member and a second path around a second side of the cutting member, the structural elements of the guiding structure further comprising a first guiding column and a second guiding column for guiding the at least one fiber at least partly around the circumference of said first or second guiding column, wherein the first guiding column being located in the protection element between the cutting member and the retaining element along the first path of the at least one fiber, and wherein the second guiding column being located in the protection element between the cutting member and the retaining element along the second path of the at least one fiber. In this embodiment, the fibre module may be guided along different paths around the cutting member and through the guiding structure through the fibre retaining element, providing desirable degrees of freedom in the installation of the protection element, and the tapping of fibre modules from a retractable fibre module cable.

In accordance with a further embodiment, the protection element further comprises a cable holding structure for in use receiving and holding a fibre module cable comprising one or more fibre modules near the entry location for the at least one fibre module. This enables the protection element to be fixed to the retractable fibre module main cable. In a preferred embodiment, the protection element is even part of a tapping box.

The fibre retaining element of the protection element may comprise a clamping structure for clamping the at least one fibre module, although any other type of retaining may advantageously be applied. Such a clamping structure may for example comprise one or more retaining grooves which enable to easily install the fibre module in the grooves and subsequently clamping the fibre module. The cutting member, in accordance with various embodiments may comprise at least one of a group comprising: a sharp blade, or a style comprising a sharp edge on one or more sides thereof. As will be appreciated the cutting member may be designed differently then as specifically suggested here.

In accordance with a yet further embodiment, the guiding structure may further comprise one or more guiding tabs for maintaining the at least one fibre module in position along the path. For example, the guiding tabs may restrict the movement of the fibre module in such a manner that upon a pulling force on the fibre module before the entry location, the fibre module is prevented from slipping out of the guiding structure.

In accordance with a further aspect of the invention, there is provided a tapping box for tapping at least one fiber out of a cable comprising one or more fibers, the tapping box comprising a protection structure according to any one or more of the previous claims.

Moreover, in accordance with yet a further aspect of the present invention there is provided a method of installing at least a part of an optical communications network, the method comprising: installing a retractable fiber cable for backhauling communication signals from one or more remote locations to a network device; installing a tapping box on said retractable fiber cable for tapping a fiber from said cable for connecting the fiber to a fiber termination unit; guiding the fiber through a protection structure in accordance with any of the claims 1-8 for protecting the network against damage, the protection element comprising a guiding structure for receiving the fiber, wherein the guiding structure comprises a fiber retaining element for retaining the fiber tightly to prevent sliding of the fiber in an axial direction thereof through the retaining element, and a cutting member; wherein the fiber is guided along the path from the entry location, via and at least partly around the circumference of the cutting member, via the fiber retaining element to the exit location, such as to break the fiber upon a tightening of the fiber around the cutting member.

In accordance with a further aspect of the present invention there is provided a communications network comprising a plurality of fiber optic cables including a retractable fiber cable, a tapping box for tapping a fiber from said retractable fiber cable, and a fiber termination unit for providing a fiber connection to a building, the network further including a protection element for protecting the network against damage, the protection element comprising a guiding structure for receiving at least one fiber, the guiding structure for guiding the fiber along a path between an entry location and an exit location of the fiber into and out of the protection element, wherein the guiding structure comprises: a fiber retaining element for retaining the fiber tightly to prevent sliding of the fiber in an axial direction thereof through the retaining element, and a cutting member; wherein the guiding structure is arranged for guiding the fiber along the path from the entry location, via and at least partly around the circumference of the cutting member, via the fiber retaining element to the exit location, such as to break the fiber upon a tightening of the fiber around the cutting member.

### Brief description of the drawings

The invention will further be elucidated by description of some specific embodiments thereof, making reference to the attached drawings. The detailed description provides examples of possible implementations of the invention, but is not to be regarded as describing the only embodiments falling under the scope. The scope of the invention is defined in the claims, and the description is to be regarded as illustrative without being restrictive on the invention. In the drawings:
Figure 1 illustrates a protection element in accordance with an embodiment of the present invention;
Figure 2 illustrates a perspective view of the protection element of figure 1;
Figures 3a and 3b schematically illustrate the principle of a protection element in accordance with the present invention;
Figures 4a and 4b demonstrate the principle of operation of a protection element in accordance with an embodiment of the invention.

### Detailed description

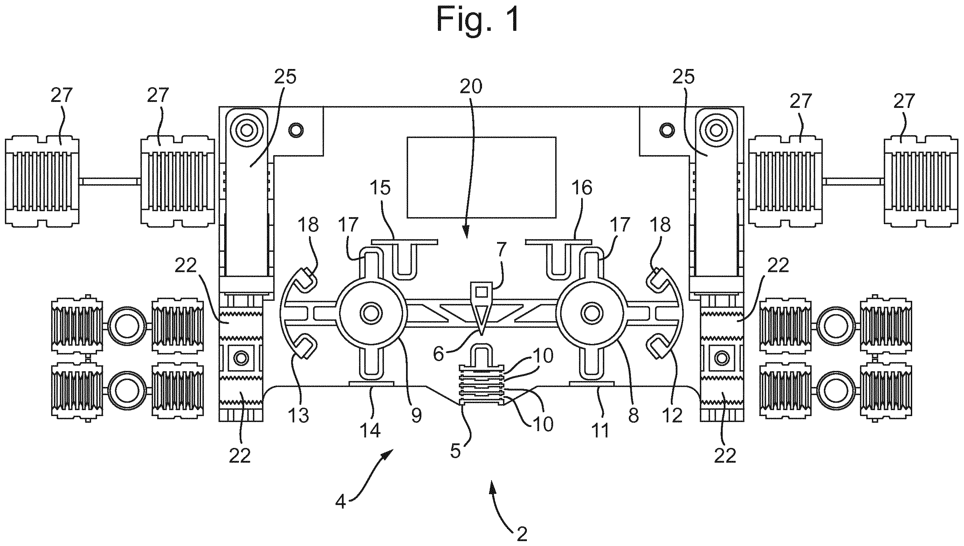

The protection element in accordance with the present invention may be integrated in a tapping box used for tapping fibres or fibre modules from a retractable fibre module cable or other fibre cable. The tapping box is provided with a mechanical structure that causes the fibre module to break in the tapping box if excessively high forces are applied to the main cable and the fibre modules therein. The fibre module will not be pulled out of the fibre termination unit in the customer's premises. The repair of the fibre connection is then limited to the location of the tapping box. Because of the simple planning of the repairs outside customer premises this can be done in a time and cost efficient way. A protection element in accordance with an embodiment of the present invention is illustrated in figure 1. The protection element generally indicated with 2 comprises a guiding structure generally indicated with 4. The guiding structure 4 comprises guiding columns 8 and 9, restraining walls 11, 12, 13, 14, 15 and 16 and a plurality of restraining taps such as tabs 17 and 18. The guiding structure 4 further comprises a cutting element 7 and a fibre retaining element 5. An entry point of the protection element is generally indicated with 20. An exit point of the protection element is indicated with reference numerals 22 (multiple exit points are available).

The protection element 2 may be installed in a tapping box, and may be connected to a retractable fibre module cable. To this end, the protection element 2 comprises clamping units 25 including inlet and outlet plugs 27 for receiving therein a cable and fixing the protection element 2 thereto. In use, a fibre module from the cable will enter the protection element somewhere at entry point 20, and may be led past or at least partially surrounding cutting member 7, and either around the left column 9 or right column 8 of the guiding structure 4. The fibre module is then retained in fibre retaining element 5 and guided towards any of the exit locations 22.

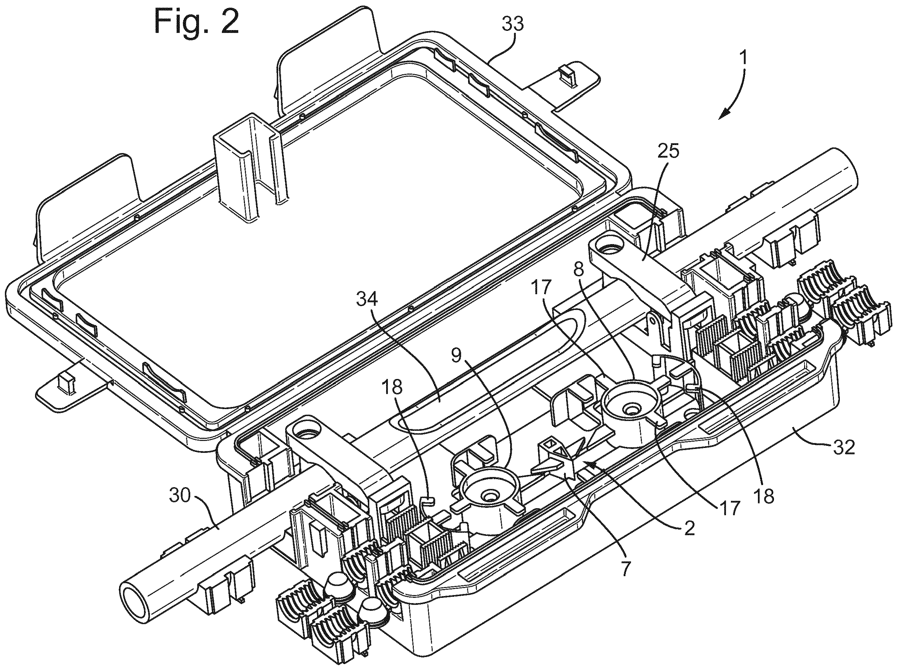

In figure 2 the same protection element 2 is illustrated including its housing 32 and cover 33. Also visible in figure 2 is the retractable fibre module main cable 30. The main cable 30 comprises a cut-out portion 34 from which fibres or fibre modules may be tapped from the cable 30. In figure 2, such fibre modules are not illustrated.

In use, a fibre module may be spun at least partially around cutting member 7, and for example past or at least partially around column 8 and through the fibre retaining element 5 (which is only visible in figure 1). As will be appreciated, multiple fibres or fibre modules may be tapped from the retractable fibre module cable 30 that may be led around either the left column 9 or right column 8 of the protection element. Importantly, the fibre modules are guided at least partially around the cutting member 7, in particular past the sharp edge thereof. The embodiment illustrated in figure 2 allows the tapping of four fibre modules from the cable 30 (having four exit points). As will be appreciated, any other member of exit points may be made available. The restraining tabs 17 and 18, which are also visible in figure 2, prevent any of the fibre modules spun around any of the left or right columns 9 or 8 from slipping out of the guiding path through the protection element.

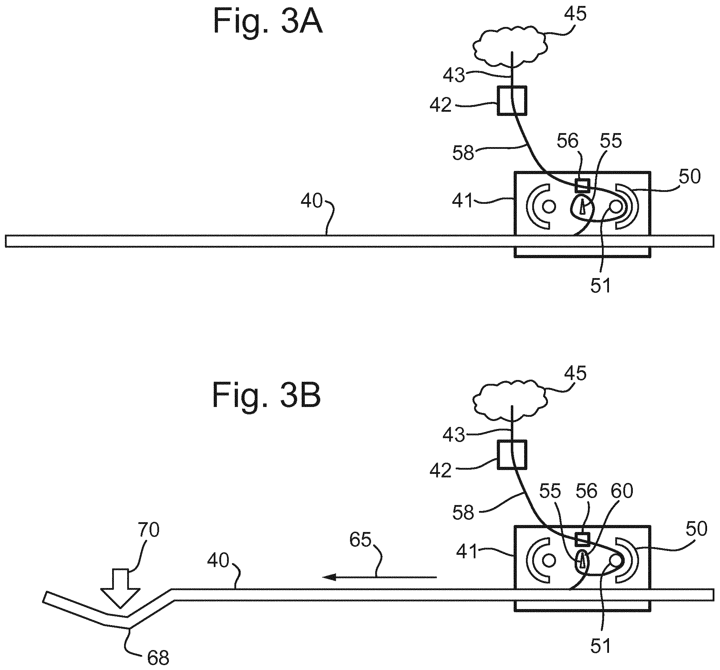

The principles of operation of a protection element in accordance with the present invention is schematically illustrated in figures 3a and 3b. In figure 3a, a retractable fibre module cable 40 is schematically illustrated. From the retractable fibre module cable, a fiber module 58 has been tapped inside tapping box 41. Tapping box 41 comprises a protection element in accordance with the present invention. The protection element comprises a guiding structure consisting, amongst others, of guiding elements 50 and 51. The protection element further comprises cutting edge 55 and fibre retaining element 56. The fibre module 58 which is tapped out of retractable fibre module cable 40 is loosely spun around cutting member 55, then around right column 51 and through the fibre retaining element 56. It then exits the tapping box 41 and proceeds towards fibre termination unit 42. Here, it is connected to an internal connection 43 of the building interconnecting the local area network (LAN) 45 to the optical communications network accessible via cable 40. In figure 3a, the installed tapping box and protection element 41 are illustrated during normal operation, in case no damage to the cable 40 has occurred.

Figure 3b illustrated a further situation wherein the cable 40 has been hit by an excavator at location 68. The excavator has exerted a pulling force schematically illustrated by error 70 at location 68 on the cable 40. As a result of the pulling force, the fibre module 58 that has been tapped from the cable 40 in tapping box 41, has experienced a strong pulling force in the direction of location 68. The pulling force towards location 68 is schematically illustrated by arrow 65. Due to the pulling force 65, the fibre module 58 has tightened around cutting member 55, and column 51. This is due to the fact that the fibre module 58 is retained in fibre retaining element 56 that prevents the fibre module 58 from slipping therethrough. As a result, the tightening of the fibre module 58 has caused the fibre module to break at the cutting member 55 as illustrated schematically by reference numeral 60. Instead of having to repair the fibre module at fibre termination unit 42 or anywhere else between tapping box 41 and LAN 45, due to the protection element in tapping box 41 the location of breaking of the fibre module is known. The fibre module will due to the protection module always break inside the tapping box 41, which can be dug up and repaired without delay.

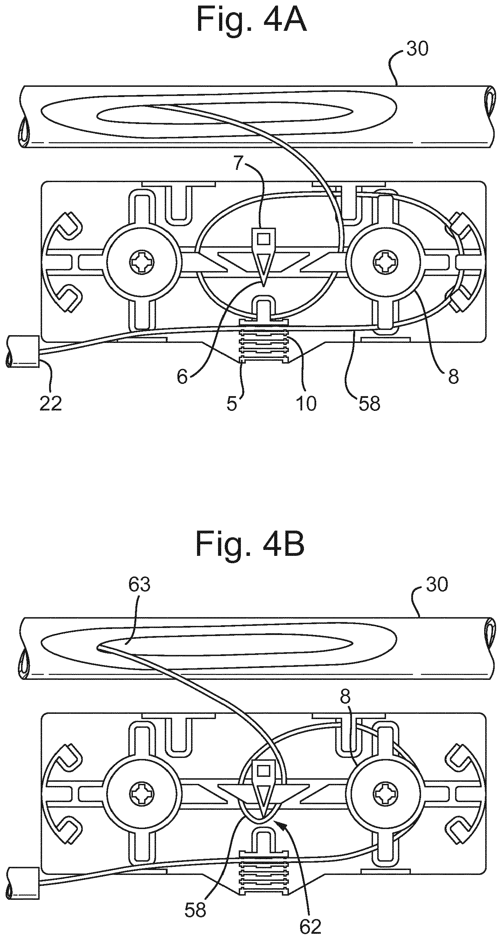

A protection element in accordance with the present invention is further depicted in figures 4a and 4b. The pictures 4a and 4b are photographs of a prototype of a protection element in accordance with the present invention. In figure 4a, the cutting member 7, the fibre retaining element 5 and the right column 8 have been indicated with reference numerals. The cutting member 7 comprises sharp edge 6. Fibre module 58 is tapped out of cable 30, and is guided along a path through the protection element completely around cutting member 7 and partially around column 8. The fibre module is retained in one of the retaining grooves 10 of the fibre retaining element 5. Thereafter, it is led towards exit location 22.

In case of an unexpected pulling force on the fibre module 58 towards the location 63 in the cable, the fibre module 58 will tighten around the cutting member 7, and the column 8 as indicated in figure 4b. This will cause the fibre module 58 to tighten around the sharp edge 6 of the cutting member 7. As a result, the fibre module will break at the location indicated with arrow 62.

The present invention has been described in terms of some specific embodiments thereof. It will be appreciated that the embodiments shown in the drawings and described herein are intended for illustrated purposes only and are not by any manner or means intended to be restrictive on the invention. The context of the invention discussed here is merely restricted by the scope of the appended claims.

## Claims

1. Protection element (2) for protecting a fiber network component against damage thereof, the protection element (2) comprising a guiding structure (4) for receiving at least one fiber (58), the guiding structure for guiding the fiber along a path between an entry location (20) and an exit location (22) of the fiber into and out of the protection element (2), wherein the guiding structure (4) comprises:
a fiber retaining element (5) for retaining the fiber tightly to prevent sliding of the fiber (58) in an axial direction thereof through the retaining element (5); and
a cutting member (7);
wherein the protection element (2) comprises a cable holding structure (27, 25) for receiving and holding, near said entry location (20) for the at least one fiber, a fiber module cable comprising one or more fibers, wherein the guiding structure (4) is arranged for guiding the fiber (58) along the path from the entry location (20), via and at least partly around the circumference of the cutting member (7), via the fiber retaining element (5) to the exit location (22), such as to break the fiber (58) upon a tightening of the fiber around the cutting member (7).

2. Protection element (2) according to claim 1, the guiding structure (4) further comprising a first guiding column (8, 9) for guiding the at least one fiber (58) at least partly around the circumference thereof, the first guiding column (8, 9) being located in the protection element (2) along the path of the fiber between the cutting member (7) and the retaining element (5).

3. Protection element (2) according to claim 1, wherein the guiding structure (4) is arranged for guiding the at least one fiber (58) along either one or both of a first path around a first side of the cutting member (7) and a second path around a second side of the cutting member (7), the structural elements of the guiding structure (4) further comprising a first guiding column (8) and a second guiding column (9) for guiding the at least one fiber (58) at least partly around the circumference of said first or second guiding column (8, 9),
wherein the first guiding column (8) being located in the protection element (2) between the cutting member (7) and the retaining element (5) along the first path of the at least one fiber, and wherein the second guiding column (9) being located in the protection element (2) between the cutting member (7) and the retaining element (5) along the second path of the at least one fiber.

4. Protection element (2) according to any of the previous claims, wherein the retaining element (5) comprises a clamping structure (10) for clamping the at least one fiber.

5. Protection element (2) according to claim 4, wherein the clamping structure (10) comprises one or more retaining grooves (10) for clamping the at least one fiber.

6. Protection element (2) according to any of the previous claims, wherein the cutting member (7) comprises at least one of a group comprising: a sharp blade, or a style comprising a sharp edge (6) on one or more sides thereof.

7. Protection element (2) according to any of the previous claims, the guiding structure (4) further comprising one or more guiding tabs (17, 18) for maintaining the at least one fiber (58) in position along the path.

8. Protection element (2) according to any of the previous claims, wherein the at least one fiber (58) is at least one of a group comprising: one or more individual fibers, a fiber module comprising one or more fibers, and a plurality of fiber modules.

9. Tapping box (41) for tapping at least one fiber out of a cable comprising one or more fibers, the tapping box comprising a protection element (2) according to any one or more of the previous claims.

10. Method of installing at least a part of an optical communications network, the method comprising:
installing a retractable fiber module cable (40) for backhauling communication signals from one or more remote locations (45) to a network device;
installing a tapping box (41) on said retractable fiber cable (40) for tapping at least one fiber (58) from said cable for connecting the fiber to a fiber termination unit (42);
**characterized by**:
guiding the fiber (58) through a protection element (2) in accordance with any of the claims 1-8 for protecting the network against damage, the protection element (2) comprising a guiding structure (4) for receiving the fiber (58), wherein the guiding structure (4) comprises a fiber retaining element (5) for retaining the fiber tightly to prevent sliding of the fiber (58) in an axial direction thereof through the retaining element (5), and a cutting member (7);
wherein the fiber (58) is guided along the path from the entry location (20), via and at least partly around the circumference of the cutting member, via the fiber retaining element (5) to the exit location (22), such as to break the fiber (58) upon a tightening of the fiber around the cutting member (7).

11. Method according to claim 10, wherein the at least one fiber (58) is at least one of a group comprising: one or more individual fibers, a fiber module comprising one or more fibers, and a plurality of fiber modules.

12. Communications network comprising a plurality of fiber optic cables including a retractable fiber cable (40), a tapping box (41) for tapping at least one fiber (58) from said retractable fiber cable (40), and a fiber termination unit (42) for providing a fiber connection to a building, **characterized by** the network further including a protection element (2) according to any of the claims 1-8 for protecting the network against damage, the protection element (2) comprising a guiding structure (4) for receiving at least one fiber (58), the guiding structure (4) for guiding the fiber (58) along a path between an entry location (20) and an exit location (22) of the fiber into and out of the protection element (2), wherein the guiding structure (4) comprises: a fiber retaining element (5) for retaining the fiber tightly to prevent sliding of the fiber (58) in an axial direction thereof through the retaining element (5), and a cutting member (7); wherein the protection element (2) comprises a cable holding structure (27, 25) for receiving and holding, near said entry location (20) for the at least one fiber, at least one of the fiber module cables comprising one or more fibers, wherein the guiding structure (4) is arranged for guiding the fiber (58) along the path from the entry location (20), via and at least partly around the circumference of the cutting member (7), via the fiber retaining element (5) to the exit location (22), such as to break the fiber upon a tightening of the fiber (58) around the cutting member (7).

13. Communications network according to claim 12, wherein the at least one fiber (58) is at least one of a group comprising: one or more individual fibers, a fiber module comprising one or more fibers, and a plurality of fiber modules.

## Patentansprüche

1. Schutzelement (2) zum Schutz einer Fasernetzwerkkomponente gegen Beschädigung davon, wobei das Schutzelement (2) eine Führungsstruktur (4) zum Aufnehmen wenigstens einer Faser (58), wobei die Führungsstruktur zum Führen der Faser entlang eines Pfades zwischen einer Eintrittsstelle (20) und Austrittsstelle (22) der Faser in das und aus dem Schutzelement (2) ausgebildet ist, wobei die Führungsstruktur (4) umfasst:
ein Faserhalteelement (5) zum Festhalten der Faser, um ein Gleiten der Faser (58) in einer axialen Richtung davon durch das Halteelement (5) zu verhindern; und
ein Schneidelement (7);
wobei das Schutzelement (2) eine Kabelhaltestruktur (27, 25) zum Aufnehmen und Halten eines Fasermodulkabels, das eine oder mehrere Fasern umfasst, in der Nähe der Eintrittsstelle (20) für die wenigstens eine Faser umfasst, wobei die Führungsstruktur (4) zum Führen der Faser (58) entlang des Pfades von der Eintrittsstelle (20) über und wenigstens teilweise um den Umfang des Schneidelements (7) über das Faserhalteelement (5) zu der Austrittsstelle (22) angeordnet ist, um zum Beispiel die Faser (58) beim Festziehen der Faser um das Schneidelement (7) zu brechen.

2. Schutzelement (2) nach Anspruch 1, wobei die Führungsstruktur (4) ferner eine erste Führungssäule (8, 9) zum Führen der wenigstens einen Faser (58) wenigstens teilweise um ihren Umfang herum, wobei die erste Führungssäule (8, 9) im Schutzelement (2) entlang des Pfades der Faser zwischen dem Schneidelement (7) und dem Halteelement (5) angeordnet sein.

3. Schutzelement (2) nach Anspruch 1, wobei die Führungsstruktur (4) zum Führen der wenigstens einen Faser (58) entlang eines oder beider eines ersten Pfades um eine erste Seite des Schneidelements (7) und eines zweiten Pfades um eine zweite Seite des Schneidelements (7) angeordnet ist, wobei die Strukturelemente der Führungsstruktur (4) ferner eine erste Führungssäule (8) und eine zweite Führungssäule (9) zum Führen der wenigstens einen Faser (58) wenigstens teilweise um den Umfang der ersten oder zweiten Führungssäule (8, 9) herum umfassen,
wobei sich die erste Führungssäule (8) in dem Schutzelement (2) zwischen dem Schneidelement (7) und dem Halteelement (5) entlang des ersten Pfades der wenigstens einen Faser befindet, und wobei sich die zweite Führungssäule (9) im Schutzelement (2) zwischen dem Schneidelement (7) und dem Halteelement (5) entlang des zweiten Pfades der wenigstens einen Faser befindet.

4. Schutzelement (2) nach einem der vorhergehenden Ansprüche, wobei das Halteelement (5) eine Klemmstruktur (10) zum Klemmen der wenigstens einen Faser umfasst.

5. Schutzelement (2) nach Anspruch 4, wobei die Klemmstruktur (10) eine oder mehrere Halterillen (10) zum Klemmen der wenigstens einen Faser umfasst.

6. Schutzelement (2) nach einem der vorhergehenden Ansprüche, wobei das Schneidelement (7) wenigstens eines aus einer Gruppe umfasst, umfassend: eine scharfe Klinge oder einen Stift, der eine scharfe Kante (6) auf einer oder mehreren Seiten davon umfasst.

7. Schutzelement (2) nach einem der vorhergehenden Ansprüche, wobei die Führungsstruktur (4) ferner eine oder mehrere Führungslaschen (17, 18) umfasst, um die wenigstens eine Faser (58) entlang des Pfades in Position zu halten.

8. Schutzelement (2) nach einem der vorhergehenden Ansprüche, wobei die wenigstens eine Faser (58) wenigstens zu einer Gruppe gehört, die Folgendes umfasst: eine oder mehrere einzelne Fasern, ein Fasermodul, das eine oder mehrere Fasern umfasst, und mehrere Fasermodule.

9. Abzweigkasten (41) zum Abzweigen wenigstens einer Faser aus einem Kabel, das eine oder mehrere Fasern umfasst, wobei der Abzweigkasten ein Schutzelement (2) nach einem oder mehreren der vorherigen Ansprüche umfasst.

10. Verfahren zum Installieren wenigstens eines Teils eines optischen Kommunikationsnetzwerks, wobei das Verfahren umfasst:
Installieren eines einziehbaren Fasermodulkabels (40) zum Zurückführen von Kommunikationssignalen von einem oder mehreren entfernten Stellen (45) zu einem Netzwerkgerät;
Installieren eines Abzweigkastens (41) an dem einziehbaren Faserkabel (40) zum Abzweigen wenigstens einer Faser (58) von dem Kabel zum Verbinden der Faser mit einer Faserabschlusseinheit (42);
**gekennzeichnet durch**:
Führen der Faser (58) durch ein Schutzelement (2) nach einem der Ansprüche 1 bis 8 zum Schutz des Netzwerks vor Beschädigung, wobei das Schutzelement (2) eine Führungsstruktur (4) zum Aufnehmen der Faser (58) umfasst, wobei die Führungsstruktur (4) ein Faserhalteelement (5) zum Festhalten der Faser, um ein Gleiten der Faser (58) in einer axialen Richtung davon durch das Halteelement (5) zu verhindern, und ein Schneidelement (7) umfasst;
wobei die Faser (58) entlang des Pfades von der Eintrittsstelle (20) über und
wenigstens teilweise um den Umfang des Schneidelements herum, über das Faserhalteelement (5) zu der Austrittsstelle (22) geführt wird, um zum Beispiel die Faser (58) beim Festziehen der Faser um das Schneidelement (7) zu brechen.

11. Verfahren nach Anspruch 10, wobei die wenigstens eine Faser (58) wenigstens zu einer Gruppe gehört, die Folgendes umfasst: eine oder mehrere einzelne Fasern, ein Fasermodul, das eine oder mehrere Fasern umfasst, und mehrere Fasermodule.

12. Kommunikationsnetzwerk, umfassend mehrere Glasfaserkabel, einschließlich eines einziehbaren Faserkabels (40), eines Abzweigkastens (41) zum Abzweigen wenigstens einer Faser (58) von dem einziehbaren Faserkabel (40) und einer Faserabschlusseinheit (42) zum Bereitstellen einer Faserverbindung an ein Gebäude, **gekennzeichnet durch** das Netzwerk, das ferner ein Schutzelement (2) nach einem der Ansprüche 1 bis 8 zum Schutz des Netzwerks gegen Beschädigung einschließt, wobei das Schutzelement (2) eine Führungsstruktur (4) zum Aufnehmen wenigstens einer Faser (58), die Führungsstruktur (4) zum Führen der Faser (58) entlang eines Pfades zwischen einer Eintrittsstelle (20) und einer Austrittsstelle (22) der Faser in das und aus dem Schutzelement (2) umfasst, wobei die Führungsstruktur (4) Folgendes umfasst: ein Faserhalteelement (5) zum Festhalten der Faser, um ein Gleiten der Faser (58) in einer axialen Richtung davon durch das Halteelement (5) zu verhindern, und ein Schneidelement (7); wobei das Schutzelement (2) eine Kabelhaltestruktur (27, 25) zum Aufnehmen und Halten in der Nähe der Eintrittsstelle (20) für die wenigstens eine Faser umfasst, wobei wenigstens eines der Fasermodulkabel eine oder mehrere Fasern umfasst; wobei die Führungsstruktur (4) zum Führen der Faser (58) entlang des Pfades von der Eintrittsstelle (20) über und wenigstens teilweise um den Umfang des Schneidelements (7) herum, über das Faserhalteelement (5) zu der Austrittsstelle (22) angeordnet ist, um zum Beispiel die Faser beim Festziehen der Faser (58) um das Schneidelement (7) zu brechen.

13. Kommunikationsnetzwerk nach Anspruch 12, wobei die wenigstens eine Faser (58) wenigstens zu einer Gruppe gehört, die Folgendes umfasst:
eine oder mehrere einzelne Fasern, ein Fasermodul, das eine oder mehrere Fasern umfasst, und mehrere Fasermodule.

## Revendications

1. Élément de protection (2) pour protéger un composant de réseau de fibres contre sa détérioration, l'élément de protection (2) comprenant une structure de guidage (4) pour recevoir au moins une fibre (58), la structure de guidage pour guider la fibre le long d'une trajectoire entre un emplacement d'entrée (20) et un emplacement de sortie (22) de la fibre dans et hors de l'élément de protection (2), dans lequel la structure de guidage (4) comprend :
un élément de retenue de fibre (5) pour retenir fermement la fibre afin d'empêcher le coulissement de la fibre (58) dans sa direction axiale à travers l'élément de retenue (5) ; et
un élément de coupe (7) ;
dans lequel l'élément de protection (2) comprend une structure de support de câble (27, 25) pour recevoir et supporter, à proximité dudit emplacement d'entrée (20) pour la au moins une fibre, un câble de module de fibre comprenant une ou plusieurs fibres, dans lequel la structure de guidage (4) est agencée pour guider la fibre (58) le long de la trajectoire à partir de l'emplacement d'entrée (20), via et au moins partiellement autour de la circonférence de l'élément de coupe (7), via l'élément de retenue de fibre (5) jusqu'à l'emplacement de sortie (22), afin de casser la fibre (58) suite à un serrage de la fibre autour de l'élément de coupe (7).

2. Élément de protection (2) selon la revendication 1, la structure de guidage (4) comprenant en outre une première colonne de guidage (8, 9) pour guider la au moins une fibre (58) au moins partiellement autour de sa circonférence, la première colonne de guidage (8, 9) étant positionnée dans l'élément de protection (2) le long de la trajectoire de la fibre entre l'élément de coupe (7) et l'élément de retenue (5).

3. Élément de protection (2) selon la revendication 1, dans lequel la structure de guidage (4) est agencée pour guider la au moins une fibre (58) le long de l'une ou des deux parmi une première trajectoire autour d'un premier côté de l'élément de coupe (7) et une seconde trajectoire autour d'un second côté de l'élément de coupe (7), les éléments structurels de la structure de guidage (4) comprenant en outre une première colonne de guidage (8) et une seconde colonne de guidage (9) pour guider la au moins une fibre (58) au moins partiellement autour de la circonférence de ladite première ou seconde colonne de guidage (8, 9),
dans lequel la première colonne de guidage (8) est positionnée dans l'élément de protection (2) entre l'élément de coupe (7) et l'élément de retenue (5) le long de la première trajectoire de la au moins une fibre, et dans lequel la seconde colonne de guidage (9) est positionnée dans l'élément de protection (2) entre l'élément de coupe (7) et l'élément de retenue (5) le long de la seconde trajectoire de la au moins une fibre.

4. Élément de protection (2) selon l'une quelconque des revendications précédentes, dans lequel l'élément de retenue (5) comprend une structure de serrage (10) pour serrer la au moins une fibre.

5. Élément de protection (2) selon la revendication 4, dans lequel la structure de serrage (10) comprend une ou plusieurs rainures de retenue (10) pour serrer la au moins une fibre.

6. Élément de protection (2) selon l'une quelconque des revendications précédentes, dans lequel l'élément de coupe (7) comprend au moins l'un d'un groupe comprenant : une lame tranchante ou un burin comprenant un bord tranchant (6) sur un ou plusieurs de ses côtés.

7. Élément de protection (2) selon l'une quelconque des revendications précédentes, la structure de guidage (4) comprenant en outre une ou plusieurs languettes de guidage (17, 18) pour maintenir la au moins une fibre (58) en position le long de la trajectoire.

8. Élément de protection (2) selon l'une quelconque des revendications précédentes, dans lequel la au moins une fibre (58) est au moins l'un d'un groupe comprenant : une ou plusieurs fibres individuelles, un module de fibre comprenant une ou plusieurs fibres, et une pluralité de modules de fibre.

9. Boîte de soutirage (41) pour soutirer au moins une fibre hors d'un câble comprenant une ou plusieurs fibres, la boîte de soutirage comprenant un élément de protection (2) selon l'une quelconque ou plusieurs des revendications précédentes.

10. Procédé pour installer au moins une partie d'un réseau de communication optique, le procédé comprenant les étapes consistant à :
installer un câble de module de fibre (40) rétractable pour amener des signaux de communication d'un ou de plusieurs emplacements à distance (45) à un dispositif de réseau ;
installer une boîte de soutirage (41) sur ledit câble de fibre (40) rétractable pour soutirer au moins une fibre (58) dudit câble afin de raccorder la fibre à une unité de terminaison de fibre (42) ;
**caractérisé par** l'étape consistant à :
guider la fibre (58) à travers un élément de protection (2) selon l'une quelconque des revendications 1 à 8 pour protéger le réseau contre la détérioration, l'élément de protection (2) comprenant une structure de guidage (4) pour recevoir la fibre (58), dans lequel la structure de guidage (4) comprend un élément de retenue de fibre (5) pour retenir fermement la fibre afin d'empêcher le coulissement de la fibre (58) dans sa direction axiale à travers l'élément de retenue (5) et d'un dispositif de coupe (7) ;
dans lequel la fibre (58) est guidée le long de la trajectoire allant de l'emplacement d'entrée (20) via et au moins partiellement autour de la circonférence de l'élément de coupe, via l'élément de retenue de fibre (5) jusqu'à l'emplacement de sortie (22), afin de casser la fibre (58) suite au serrage de la fibre autour de l'élément de coupe (7).

11. Procédé selon la revendication 10, dans lequel la au moins une fibre (58) est au moins un élément d'un groupe comprenant : une ou plusieurs fibres individuelles, un module de fibre comprenant une ou plusieurs fibres et une pluralité de modules de fibre.

12. Réseau de communication comprenant une pluralité de câbles de fibre optique comprenant un câble de fibre (40) rétractable, une boîte de soutirage (41) pour soutirer au moins une fibre (58) dudit câble de fibre (40) rétractable et une unité de terminaison de fibre (42) pour fournir un raccordement de fibre à un bâtiment, **caractérisé par** le réseau qui comprend en outre un élément de protection (2) selon l'une quelconque des revendications 1 à 8 afin de protéger le réseau contre la détérioration, l'élément de protection (2) comprenant une structure de guidage (4) pour recevoir au moins une fibre (58), la structure de guidage (4) pour guider la fibre (58) le long d'une trajectoire entre un emplacement d'entrée (20) et un emplacement de sortie (22) de la fibre dans et hors de l'élément de protection (2), dans lequel la structure de guidage (4) comprend : un élément de retenue de fibre (5) pour retenir fermement la fibre afin d'empêcher le coulissement de la fibre (58) dans sa direction axiale à travers l'élément de retenue (5) et un élément de coupe (7) ; dans lequel l'élément de protection (2) comprend une structure de support de câble (27, 25) pour recevoir et supporter, à proximité dudit emplacement d'entrée (20) pour la au moins une fibre, au moins l'un des câbles de module de fibre comprenant une ou plusieurs fibres, dans lequel la structure de guidage (4) est agencée pour guider la fibre (58) le long de la trajectoire à partir de l'emplacement d'entrée (20) via et au moins partiellement autour de la circonférence de l'élément de coupe (7), via l'élément de retenue de fibre (5) jusqu'à l'emplacement de sortie (22), afin de casser la fibre suite à un serrage de la fibre (58) autour de l'élément de coupe (7).

13. Réseau de communication selon la revendication 12, dans lequel la au moins une fibre (58) est au moins un élément d'un groupe comprenant : une ou plusieurs fibres individuelles, un module de fibre comprenant une ou plusieurs fibres et une pluralité de modules de fibre.
